# EUROPEAN PATENT APPLICATION

(11) **EP 4 550 617 A1**
(43) Date of publication of application: **07.05.2025**
(21) Application number: 24819436.7
(22) Date of filing: 10.01.2024
(51) Int. Cl.: H02J 7/00, H01M 10/48, H01M 10/613, H01M 10/44

(54) **APPARATUS AND METHOD FOR CONTROLLING CHARGING OF BATTERY**

(30) Priority: 09.06.2023 KR 20230074109
(71) Applicant: LG Energy Solution, Ltd., Seoul 07335 (KR)
(72) Inventor: KIM, Taesoo, Daejeon 34122 (KR)
(74) Representative: Hoffmann Eitle
(86) International application number: PCT/KR2024/000448
(87) International publication number: WO 2024/253282

(57) **Abstract**

According to embodiments of the present invention, a battery charge control apparatus may include at least one processor; and a memory configured to store at least one instruction executed by the at least one processor.

The at least one instruction may include an instruction to detect a current temperature value of the battery, a current charge state value, and an initial charge state value at start of charging; an instruction to determine a temperature correction value stored in correspondence with the current charge state value and the initial charge state value; an instruction to correct the current temperature value based on the determined temperature correction value; and an instruction to determine a charge current value for charging the battery based on the corrected current temperature value and the current charge state value.

## Description

### [Technical Field]

This application claims priority to and the benefit of Korean Patent Application No.10-2023-0074109 filed in the Korean Intellectual Property Office on June 9, 2023, the entire contents of which are incorporated herein by reference.

The present invention relates to a battery charge control apparatus and method, and more particularly, to a battery charge control apparatus and method for controlling a charge current of a battery.

### [Background Art]

A secondary battery is a battery that can be recharged and reused even after being discharged. The secondary battery can be used as an energy source for small devices such as mobile phones, tablet PCs and vacuum cleaners, and also used as an energy source for medium and large devices such as an energy storage system (ESS) for automobiles and smart grids.

The secondary battery is applied to a system in a form of an assembly such as a battery module in which a plurality of battery cells is connected in series and parallel or a battery pack in which battery modules are connected in series and parallel according to system requirements. A high-capacity battery system with multiple battery packs connected in parallel may be applied for medium-to-large devices such as electric vehicles to meet the required capacity of the device.

Recently, as the capacity of secondary batteries increases, fast charging technology has emerged that can charge batteries more quickly. When charging a battery using a fast charge method, a step-wise charging method is mainly used, in which charging is carried out with a high charge current at the beginning of charging and charging is carried out by gradually reducing the charge current as the state of charge (SOC) or the voltage value of the battery increases. Here, considering charging safety, the charge current may be adjusted based on a current temperature of the battery.

As to fast charging, temperature difference between battery cells may occur since charging is carried out at a relatively high current compared to a general charging method. Here, considering that the characteristics of the battery where a lithium plating threshold varies depending on the temperature, the limit current must be applied based on the lowest temperature.

Meanwhile, it is often difficult to place multiple temperature sensors due to the structure of a battery system, so a method of adjusting the charge current by estimating the minimum temperature of the battery cell using a temperature estimation algorithm, or a method of adjusting the charge current by correcting the temperature value measured by a temperature sensor using a pre-measured temperature deviation value is often used. However, the temperature estimation method is less efficient in terms of data processing, and the method using a pre-measured temperature deviation value is difficult to adjust the charge current value to the optimal charge current value, and thus, charging performance may be unnecessarily lowered.

Accordingly, an appropriate fast charging solution that can solve these problems is needed.

### [Detailed Description of the Invention]

### [Technical Problem]

To obviate one or more problems of the related art, embodiments of the present disclosure provide a battery charge control apparatus that can improve charging performance and charging safety.

To obviate one or more problems of the related art, embodiments of the present disclosure also provide a method of controlling battery charging using the battery charge control apparatus.

### [Technical Solution]

In order to achieve the objective of the present disclosure, a battery charge control apparatus may include at least one processor; and a memory configured to store at least one instruction executed by the at least one processor.

The at least one instruction may include an instruction to detect a current temperature value, a current charge state value, and an initial charge state value at start of charging of the battery; an instruction to determine a temperature correction value stored in correspondence with the current charge state value and the initial charge state value; an instruction to correct the current temperature value based on the determined temperature correction value; and an instruction to determine a charge current value for charging the battery based on the corrected current temperature value and the current charge state value.

The instruction to determine the temperature correction value may include an instruction to determine the temperature correction value using a temperature correction map in which temperature correction values are predefined for each section of initial charge state values and for each section of current charge state values.

The temperature correction value may be defined based on a temperature difference value between a first position and a second position of the battery.

The first position may be a position where a temperature sensor that measures a temperature value of the battery is placed and the second location may be a location where the distance to a cooling unit is relatively closer than the distance of the first location to the cooling unit.

The temperature correction map may be predefined based on the temperature difference value between the first location and the second location measured for each section of the initial charge state values and each section of the current charge state values.

The at least one instruction may further include an instruction to obtain a cooling performance value of the cooling unit that cools the battery. Here, the instruction to determine the temperature correction value may include an instruction to identify a temperature correction value stored in correspondence with the current charge state value, the initial charge state value, and the cooling performance value.

The instruction to determine the temperature correction value may include an instruction to identify a temperature correction value using the temperature correction map in which a temperature correction value is predefined for each section of the initial charge state values, for each section of the current charge state values, and for each section of the cooling performance values.

The instruction to correct the current temperature value may include an instruction to correct the current temperature value by subtracting the determined temperature correction value from the current temperature value.

The instruction to determine the charge current value may include an instruction to identify a charge current value corresponding to the corrected current temperature value and the current charge state value in a charge map in which charge current values are predefined for each section of the temperature values and each section of the charge state values.

According to another embodiment of the present disclosure, a battery charge control method, performed by a battery charge control apparatus, may include detecting a current temperature value, a current charge state value, and an initial charge state value at start of charging of the battery; determining a temperature correction value stored in correspondence with the current charge state value and the initial charge state value; correcting the current temperature value based on the determined temperature correction value; and determining a charge current value for charging the battery based on the corrected current temperature value and the current charge state value.

The determining the temperature correction value may include determining the temperature correction value using a temperature correction map in which temperature correction values are predefined for each section of initial charge state values and for each section of current charge state values.

The temperature correction value may be defined based on a temperature difference value between a first position and a second position of the battery.

The first position may be a position where a temperature sensor that measures a temperature value of the battery is placed and the second location may be a location where the distance to a cooling unit is relatively closer than the distance of the first location to the cooling unit.

The temperature correction map may be predefined based on the temperature difference value between the first location and the second location measured for each section of the initial charge state values and each section of the current charge state values.

The method may further include obtaining a cooling performance value of the cooling unit that cools the battery. Here, the determining the temperature correction value may include identifying a temperature correction value stored in correspondence with the current charge state value, the initial charge state value, and the cooling performance value.

The determining the temperature correction value may include identifying a temperature correction value using a temperature correction map in which a temperature correction value is predefined for each section of the initial charge state values, for each section of the current charge state values, and for each section of the cooling performance values.

The correcting the current temperature value may include correcting the current temperature value by subtracting the determined temperature correction value from the current temperature value.

The determining the charge current value may include identifying a charge current value corresponding to the corrected current temperature value and the current charge state value in a charge map in which charge current values are predefined for each section of the temperature values and each section of the charge state values.

### [Advantageous Effects]

The embodiments of the present invention as described above may determe the charge current value using an optimal temperature correction value corresponding to a charge state value at the start of charging, thereby improving charging safety and charging performance.

### [Brief Description of the Drawings]

FIG. 1 is a reference table for explaining a general fast charging method.
FIG. 2 is a block diagram for explaining a battery charging system according to embodiments of the present invention.
FIG. 3 is an operational flowchart of a battery charge control method according to an embodiment of the present invention.
FIG. 4 is an example of a temperature correction map according to embodiments of the present invention.
FIG. 5 is an example of a charge map according to embodiments of the present invention.
FIG. 6 is a reference diagram for explaining a method of constructing a temperature correction map according to embodiments of the present invention.
FIG. 7 is a reference diagram for explaining a battery charge control method according to another embodiment of the present invention.
FIG. 8 is an example of the temperature correction map according to another embodiment of the present invention.
FIG. 9 is an operational flowchart of a battery charge control method according to another embodiment of the present invention.
FIG. 10 is a block diagram of a battery charge control apparatus according to embodiments of the present invention.
10: battery
100: battery assembly
200, 1000: battery charge control apparatus
610: battery module
620: cooling unit

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a minimum unit that serves to store power and a battery module refers to an assembly in which a plurality of battery cells is electrically connected.

A battery pack or battery rack refers to a system of a single structure that is assembled by electrically connecting module units, set by a battery manufacturer, which can be monitored and controlled by a battery management apparatus/system (BMS). A battery pack or battery rack may include several battery modules and a battery protection unit or any other protection device.

A battery bank refers to a group of large-scale battery rack systems configured by connecting several racks in parallel. A bank BMS for a battery bank may monitor and control rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

State of charge (SOC) refers to a current state of charge of a battery, represented in percent points [%], and State of Health (SOH) may be a current condition of a battery compared to its ideal or original conditions, represented in percent points [%].

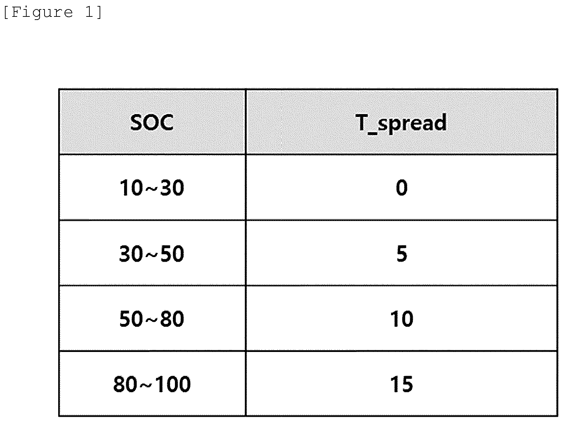

FIG. 1 is a reference table for explaining a general fast charging method.

The charge current value of the battery may be determined by a pre-stored charge map. Here, the charge map may be implemented as a table with predefined charge current values for each SOC section and temperature section, or as a table with predefined charge current values for each voltage section and temperature section. In general, the charge current value may be defined as a value that gradually decreases as a charge state value (e.g., state of charge (SOC) value or voltage value) of the battery increases.

When a battery system switches to a charge mode, a battery charge control device checks a charge current value corresponding to the current charge state value (SOC value or voltage value) and the current temperature value of the battery in a charge map stored in a storage device and controls a charging device so that the battery is charged with the corresponding charge current value.

In the case of fast charging, temperature difference between battery cells may occur since charging is carried out at a relatively high current compared to a general charging method. For example, in the case of a battery module containing a plurality of battery cells, a large temperature difference may occur between the upper part of a battery cell located in the center and the lower part of a battery cell located on the outer surface. This temperature difference may occur due to difference in cooling efficiency by a cooling unit disposed on the lower surface of the battery module.

Here, considering the characteristics of the battery in which a lithium plating threshold varies depending on the temperature, it is preferable that the charge current value is determined based on the lowest temperature among temperatures of the battery cells. However, in the case of a battery assembly in which it is difficult to place a plurality of temperature sensors due to its design structure, it may be difficult to determine the charge current value by checking a temperature deviation value in real time. To solve this problem, a temperature estimation method or a temperature correction method can be used.

First, according to the temperature estimation method, a battery charge control device estimates the minimum temperature of the battery cell using a predefined temperature estimation algorithm, checks the charge current value corresponding to the estimated temperature value in a charge map, and proceeds with charging. However, it is less efficient in terms of data processing and has limitations in quick control of charging because the temperature estimation method requires using a complex temperature estimation algorithm.

Next, according to the temperature correction method, the battery charge control device corrects a temperature measurement value measured at a specific point to the lowest temperature value using a pre-stored temperature correction map, identifies a charge current value corresponding to the corrected temperature value in a charge map, and proceeds with charging. Here, the temperature correction map may be implemented as a table in which temperature correction values for each SOC section are predefined, as shown in FIG. 1. In other words, the battery charge control device corrects the current temperature value using a temperature correction value corresponding to the current SOC in the temperature correction map, identifies a charge current value corresponding to the current SOC and the corrected temperature value in the charge map, and proceeds with charging.

In general, the temperature correction value may be defined as a temperature difference value between a temperature sensing point and the lowest temperature point measured through preliminary experiments. Here, the preliminary experiments for constructing a temperature correction map is conducted by starting charging when the battery has the lowest SOC value and then measuring temperature differences value for each SOC section until charging is completed. When rapid charging is performed using the temperature correction value calculated in this way, charging safety is excellent, but charging performance may be limited. In specific, this temperature correction map is derived based on the assumption that charging proceeds from the lowest SOC section in consideration of charging safety (worst case), and the temperature correction value may be defined as an unnecessarily large value. Accordingly, even when there is no need to attenuate the charge current, the charge speed may be unnecessarily limited and the charge time may be delayed.

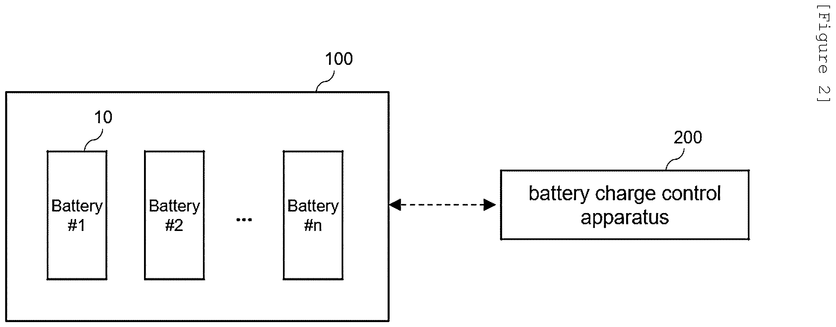

FIG. 2 is a block diagram for explaining a battery charging system according to embodiments of the present invention.

Referring to FIG. 2, the battery charging system may include a battery assembly 100 configured to include a plurality of batteries 10 and a battery charge control apparatus 200.

In the present invention, the battery assembly 100 may be included in an electric transportation means such as an electric vehicle, but the scope of the present invention is not limited to these entities.

A plurality of batteries 10 may be electrically connected to each other to form a battery assembly.

The battery charge control apparatus 200 may be configured in conjunction with the battery assembly 100 and a battery charging device. Here, the battery charge control apparatus 200 may determine a charge current for charging the battery and control the battery charging device to charge the battery according to the determined charge current.

Here, the charge current determined by the battery charge control apparatus 200 may mean the charge current applied to the battery assembly 100 or the charge current applied to an individual battery 10.

The battery charge control apparatus 200 may include a battery state information collection device that senses a state value of the battery, or may be configured to be connected to a battery state information collection device. Here, the state value of the battery may include a voltage value, a current value, a temperature value, and a state of charge (SOC) value of the battery.

The battery charge control apparatus 200 may be configured to be included in a battery system, or may be configured to be included in a battery charging device. For example, the battery charge control apparatus 200 may be implemented by being included in a battery management system (BMS) located inside a battery system, or may be implemented by being included in a control system of a rapid charger of batteries.

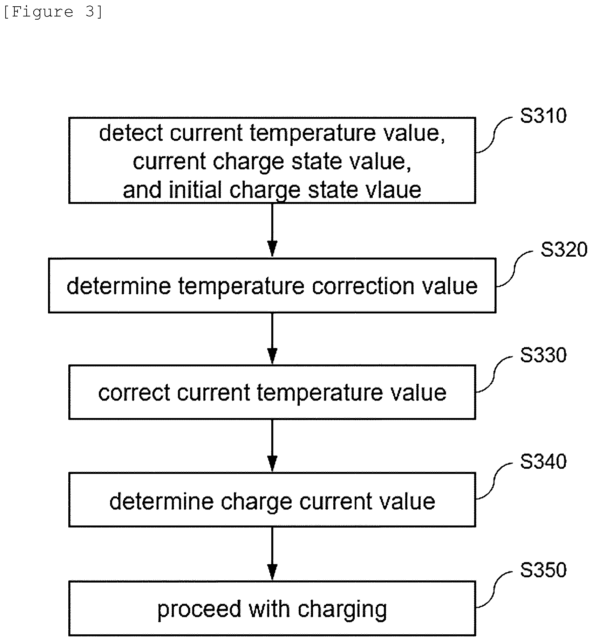

FIG. 3 is an operational flowchart of a battery charge control method according to an embodiment of the present invention. Meanwhile, the battery charge control method according to embodiments of the present invention may be performed in a fast (or rapid) charge mode, but may also be performed in a normal charge mode, if necessary.

In a charge mode, the battery charge control apparatus may detect the current temperature value, the current charge state value of the battery, and the initial charge state value at the start of charging of the battery of the battery (S310). Here, the charge state value is a value indicating a degree of charge of the battery and may include one or more of an SOC value and a voltage value.

In more detail, the battery charge control apparatus may receive a current temperature value of the battery from a temperature sensor installed at a specific location of the battery. In addition, the battery charge control apparatus may receive a current voltage value of the battery from a voltage sensor of the battery, or may estimate a current SOC value of the battery based on the current voltage value of the battery using a predefined SOC estimation algorithm. Moreover, the battery charge control apparatus may check the initial charge state value (for example, a SOC value or a voltage value at the start of charging) of the battery which is pre-stored in the storage device.

Thereafter, the battery charge control apparatus may determine the temperature correction value stored in correspondence with the current charge state value and the initial charge state value identified in S310 (S320). Here, the battery charge control apparatus may determine the temperature correction value using a pre-stored temperature correction map.

In embodiments, the temperature correction map may include data with predefined temperature correction values for each section of the initial charge state values and each section of the current charge state values.

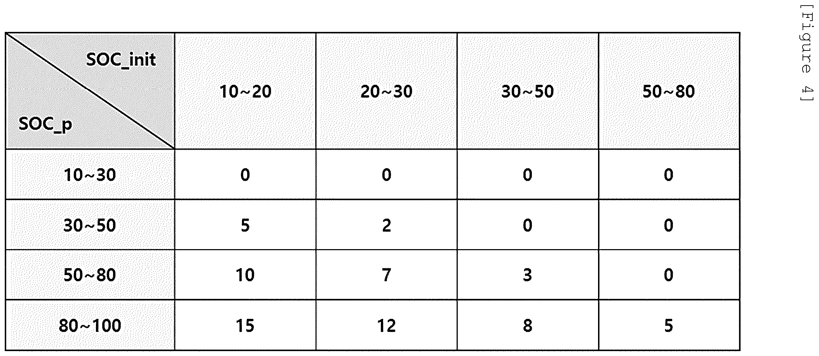

FIG. 4 is an example of a temperature correction map according to embodiments of the present invention. Referring to FIG. 4, the temperature correction map may be implemented as a table in which temperature correction values are defined for each section of the SOC value (SOC_init) at the start of charging and for each section of the current SOC value (SOC_p). Here, each of the temperature correction values may correspond to a temperature difference value between a temperature sensing location and the lowest temperature location which are measured for each section of the initial SOC and each section of the current SOC, through pre-experiments.

Referring again to FIG. 3, the battery charge control apparatus may correct the current temperature value based on the temperature correction value determined in S320 (S330). Here, the battery charge control apparatus may correct the current temperature value by subtracting the temperature correction value from the current temperature value.

For example, if the SOC of the battery at the start of charging is 15 and the current SOC value of the battery is 40, the temperature correction value may be determined to be 5. Here, when the current temperature value of the battery is 25, the battery charge control apparatus may correct the current temperature value of the battery from 25 to 20 (= 25-5).

For another example, if the SOC of the battery at the start of charging is 25 and the current SOC value of the battery is 40, the temperature correction value may be determined to be 2. Here, when the current temperature value of the battery is 25, the battery charge control apparatus may correct the current temperature value of the battery from 25 to 23 (= 25-2).

Next, the battery charge control apparatus may determine a charge current value for charging the battery based on the current temperature value corrected in S330 and current charge state value (S340). Here, the battery charge control apparatus may identify the charge current value corresponding to the corrected current temperature value and current charge state value in the pre-stored charge map.

In an embodiment, the charge map may include data with predefined charge current values for each section of the temperature value and each section of the charge state value.

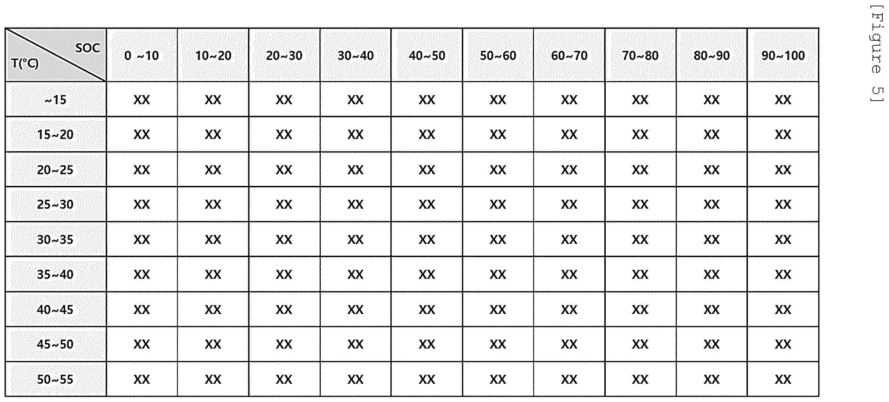

FIG. 5 is an example of a charge map according to embodiments of the present invention. Referring to FIG. 5, the charge map may be implemented as a table with predefined charge current values for each SOC section and each temperature section. Here, the charge current value may be defined as a current value (A) or a charge rate (Crate). Meanwhile, unlike what is shown in FIG. 5, the charge map may be implemented as a table with predefined charge current values for each voltage section and each temperature section.

Referring again to FIG. 3, the battery charge control apparatus may control a battery charging device to charge the battery according to the charge current value determined in S340 (S350).

The temperature difference between battery cells may vary depending on a degree of charge at the start of charging. For example, even if the batteries have the same SOC value, if charging is started when the SOC is high, the temperature difference between battery cells may appear lower than the case that charging is started when the SOC is relatively low. The battery charge control apparatus according to embodiments of the present invention may correct the current temperature value based on the optimal temperature correction value corresponding to the initial charge state value at the start of charging and determine the charge current value based on the corrected temperature value. According to embodiments of the present invention, data processing efficiency is improved by eliminating the need for a complicated data processing process, and charging safety and charging performance can be improved as the charge current is determined based on a more accurate temperature difference value.

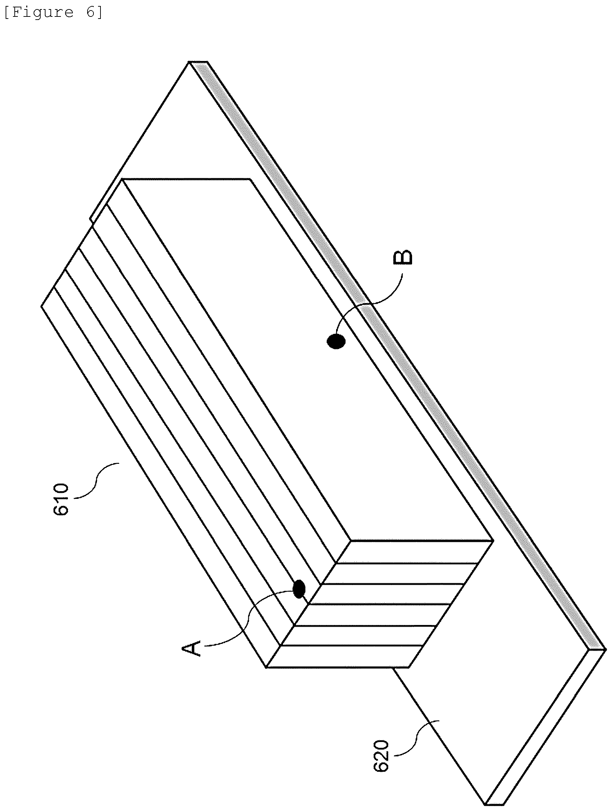

FIG. 6 is a reference diagram for explaining a method of constructing a temperature correction map according to embodiments of the present invention.

A temperature correction map according to embodiments of the present invention may be constructed through a preliminary measurement experiment on a temperature difference value between a first position and a second position of the battery. Here, the first location may correspond to a location where a temperature sensor that measures temperature values of the battery is disposed, and the second location may correspond to a location where the distance to a cooling unit is relatively closer than that of the first location.

For example, referring to FIG. 6, the top of a battery cell (point A) located in the center of the battery module 610 is a point showing the highest temperature during a charging process and a temperature sensor may be placed at point A. Meanwhile, the lower part of a battery cell (point B) located on the outer surface of the battery module 610 is a point showing the lowest temperature during the charging process due to cooling effect by the cooling unit 620. However, the temperature sensor cannot be placed at point B due to a swelling problem of the battery cell.

In order to construct a temperature correction map according to embodiments of the present invention, a preliminary measurement experiment on the temperature difference value between point A and point B may be performed. Specifically, temperature sensors are placed at each point A (first location) and point B (second location), and the initial SOC value, the SOC value confirmed during the charging process, and temperature difference values between points A and B measured during the charging process may be collected. Then, based on the collected data, a temperature correction map may be constructed, in which temperature correction values are defined for each section of the initial SOC value and for each section of the current SOC value.

The temperature correction map constructed through such a eliminary experiment may be stored in a storage device of the battery charge control apparatus. Thereafter, during the battery charging process, the battery charge control apparatus may correct the current temperature value collected through the temperature sensor placed at the first location using the pre-stored temperature correction map and determine the charge current value based on the corrected temperature value.

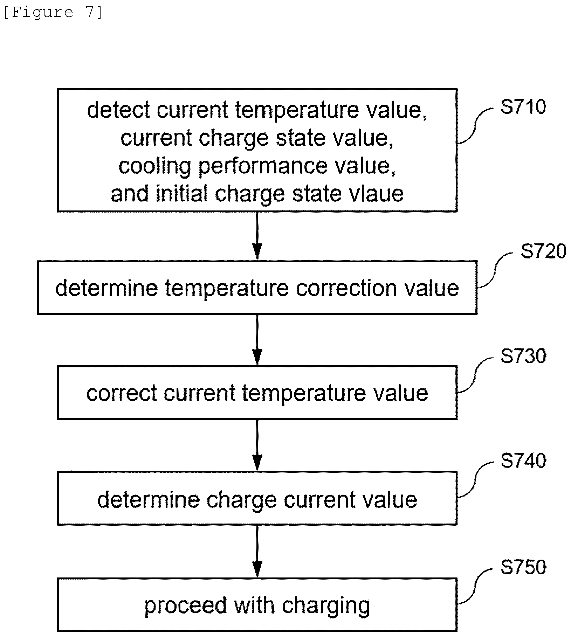

FIG. 7 is a reference diagram for explaining a battery charge control method according to another embodiment of the present invention.

In a charge mode, the battery charge control apparatus may check a current temperature value, a current charge state value, an initial charge state value at the start of charging of the battery, and a cooling performance value of a cooling unit (S710). Here, the cooling performance value is a value indicating a degree of cooling by the cooling unit, and may correspond, for example, to a power value (W) supplied to the cooling unit. Meanwhile, the battery charge control apparatus may be configured to check the cooling performance value of the cooling unit in connection with a control device of the cooling unit.

Thereafter, the battery charge control apparatus may determine a temperature correction value stored in correspondence with the current charge state value, the initial charge state value, and the cooling performance value obtained in S710 (S720). Here, the battery charge control apparatus may identify the temperature correction value using a pre-stored temperature correction map.

In embodiments, the temperature correction map may include data with predefined temperature correction values for each section of initial charge state values, each section of current charge state values, and each section of cooling performance values.

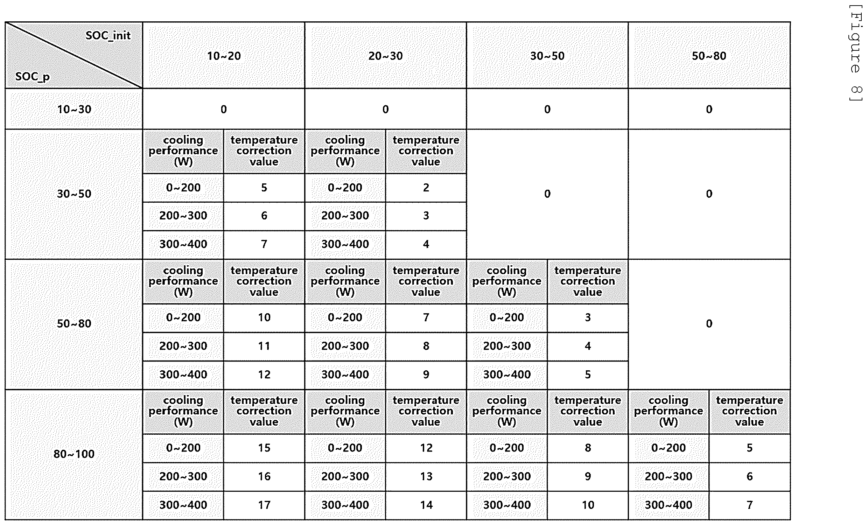

FIG. 8 is an example of the temperature correction map according to another embodiment of the present invention. Referring to FIG. 8, the temperature correction map may be implemented as a table in which temperature correction values are defined for each section of the initial SOC values (SOC_init), each section of the current SOC values (SOC_p), and each section of the cooling performance values (W). Here, each of the temperature correction values corresponds to a temperature difference value between the temperature sensing location and the lowest temperature location measured for each section of the initial SOC, each section of the current SOC, and each section of cooling performance value (W) through preliminary experiments.

Referring again to FIG. 7, the battery charge control apparatus may correct the current temperature value based on the temperature correction value determined in S720 (S730). Here, the battery charge control apparatus may correct the current temperature value by subtracting the temperature correction value from the current temperature value.

For example, if the SOC of the battery at the start of charging is 15, the current SOC value of the battery is 40, and the cooling performance value is 250, the temperature correction value may be determined to be 6. Here, when the current temperature value of the battery is 25, the battery charge control apparatus may correct the current temperature value of the battery from 25 to 19 (= 25-6).

For another example, if the SOC of the battery at the start of charging is 25, the current SOC value of the battery is 40, and the cooling performance value is 350, the temperature correction value may be determined to be 4. Here, when the current temperature value of the battery is 25, the battery charge control apparatus may correct the current temperature value of the battery from 25 to 21 (= 25-4).

Next, the battery charge control apparatus may determine a charge current value for charging the battery based on the current temperature value corrected in S730 and the current charge state value (S740). Here, the battery charge control apparatus may identify the charge current value corresponding to the corrected current temperature value and the current charge state value in the pre-stored charge map.

Thereafter, the battery charge control apparatus may control the battery charging device to charge the battery according to the charge current value determined in S740 (S750).

The temperature difference between battery cells may vary depending on a degree of charge at the start of charging and the performance of a cooling unit. For example, even if the batteries have the same SOC value, if the output of the cooling unit is high, the temperature difference between battery cells may appear larger than that of the case that the output of the cooling unit is relatively low. The battery charge control apparatus according to embodiments of the present invention may more precisely correct the current temperature value based on the performance of the cooling unit as well as the initial charge state value at the start of charging, and determine the charge current value based on the corrected temperature value.

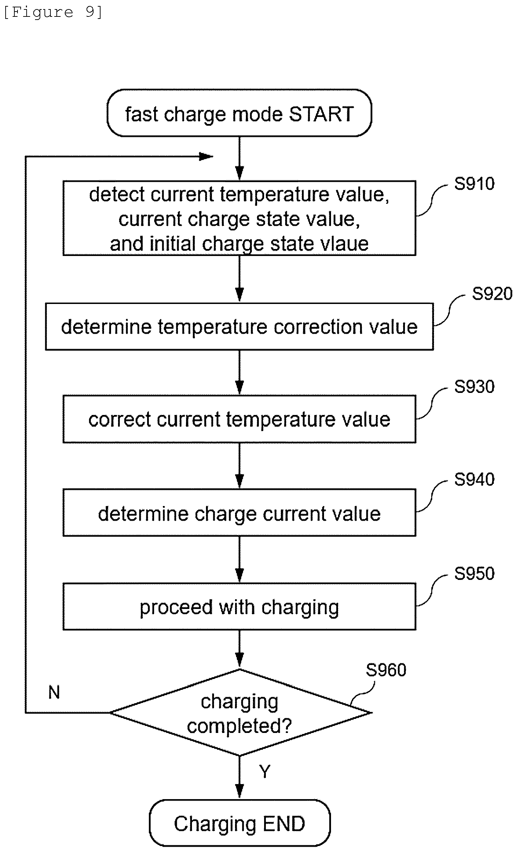

FIG. 9 is an operational flowchart of a battery charge control method according to another embodiment of the present invention.

When a fast charge mode for the battery is initiated, the battery charge control apparatus may check the current temperature value, a current charge state value, and an initial charge state value at the start of charging of the battery (S910). Here, since the current charge state value corresponds to the initial charge state value, the battery charge control apparatus may store the current charge state value as the initial charge state value in a storage device.

The battery charge control apparatus may determine the temperature correction value stored in correspondence with the current charge state value and the initial charge state value obtained in S910 (S920). Here, the battery charge control apparatus may identify the temperature correction value using a pre-stored temperature correction map.

The battery charge control apparatus may determine a charge current value for charging the battery based on the current temperature value corrected in S930 and the current charge state value (S940). Here, the battery charge control apparatus may determine the charge current value corresponding to the corrected current temperature value and the current charge state value in a pre-stored charge map.

The battery charge control apparatus may control the battery charging device to charge the battery according to the charge current value determined in S940 (S950).

The battery charge control apparatus may check whether the battery satisfies predefined charging completion conditions (S960). For example, the battery charge control apparatus may determine whether charging is completed based on whether the battery has reached a predefined full charge voltage.

If charging is not completed, the battery charge control apparatus may return to S910 and obtain the current temperature value, the current charge state value, and the stored initial charge state value of the battery. Thereafter, the battery charge control apparatus may control charging by gradually updating the charge current value using the temperature correction map and the charge map until charging is completed.

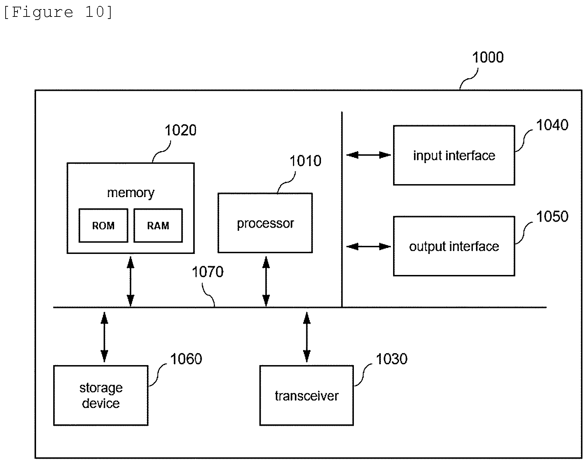

FIG. 10 is a block diagram of a battery charge control apparatus according to embodiments of the present invention.

The battery charge control apparatus 1000 according to an embodiment of the present invention may be included in a battery system or may be included in a battery charging device. For example, the battery charge control apparatus 1000 may be implemented by being included in a battery management system (BMS) located inside a battery system, or may be implemented by being included in a control system of a rapid charger of a battery.

The battery charge control apparatus 1000 may include at least one processor 1010, a memory 1020 that stores at least one instruction executed by the processor, and a transceiver 1030 connected to a network to perform communication.

The at least one instruction may include an instruction to detect a current temperature value, a current charge state value, and an initial charge state value at start of charging of the battery; an instruction to determine a temperature correction value stored in correspondence with the current charge state value and the initial charge state value; an instruction to correct the current temperature value based on the determined temperature correction value; and an instruction to determine a charge current value for charging the battery based on the corrected current temperature value and the current charge state value.

The instruction to determine the temperature correction value may include an instruction to determine the temperature correction value using a temperature correction map in which temperature correction values are predefined for each section of initial charge state values and for each section of current charge state svalues.

The temperature correction value may be defined based on a temperature difference value between a first position and a second position of the battery.

The first position may be a position where a temperature sensor that measures a temperature value of the battery is placed and the second location may be a location where the distance to a cooling unit is relatively closer than the distance of the first location to the cooling unit.

The temperature correction map may be predefined based on the temperature difference value between the first location and the second location measured for each section of the initial charge state values and each section of the current charge state values.

The at least one instruction may further include an instruction to obtain a cooling performance value of the cooling unit that cools the battery. Here, the instruction to determine the temperature correction value may include an instruction to identify a temperature correction value stored in correspondence with the current charge state value, the initial charge state value, and the cooling performance value.

The instruction to determine the temperature correction value may include an instruction to identify a temperature correction value using the temperature correction map in which a temperature correction value is predefined for each section of the initial charge state values, for each section of the current charge state values, and for each section of the cooling performance values.

The instruction to correct the current temperature value may include an instruction to correct the current temperature value by subtracting the determined temperature correction value from the current temperature value.

The instruction to determine the charge current value may include an instruction to identify a charge current value corresponding to the corrected current temperature value and the current charge state value in a charge map in which charge current values are predefined for each section of the temperature values and each section of the charge state values.

The battery charge control apparatus 1000 may further include an input interface 1040, an output interface 1050, a storage device 1060, and the like. Respective components included in the battery charge control apparatus 1000 may be connected by a bus 1070 to communicate with each other.

Here, the processor 1010 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery charge control apparatus, comprising:
at least one processor; and
a memory configured to store at least one instruction executed by the at least one processor,
wherein the at least one instruction includes:
an instruction to detect a current temperature value, a current charge state value, and an initial charge state value at start of charging of a battery;
an instruction to determine a temperature correction value stored in correspondence with the current charge state value and the initial charge state value;
an instruction to correct the current temperature value based on the determined temperature correction value; and
an instruction to determine a charge current value for charging the battery based on the corrected current temperature value and the current charge state value.

2. The battery charge control apparatus of claim 1, wherein the instruction to determine the temperature correction value includes:
an instruction to determine the temperature correction value using a temperature correction map in which temperature correction values are predefined for each section of initial charge state values and for each section of current charge state values.

3. The battery charge control apparatus of claim 2, wherein the temperature correction value is defined based on a temperature difference value between a first position and a second position of the battery.

4. The battery charge control apparatus of claim 3, wherein the first position is a position where a temperature sensor that measures a temperature value of the battery is placed and the second location is a location where the distance to a cooling unit is relatively closer than the distance of the first location to the cooling unit.

5. The battery charge control apparatus of claim 3, wherein the temperature correction map is predefined based on the temperature difference value between the first location and the second location measured for each section of the initial charge state values and each section of the current charge state values.

6. The battery charge control apparatus of claim 1, wherein the at least one instruction further includes an instruction to obtain a cooling performance value of a cooling unit that cools the battery, and
wherein the instruction to determine the temperature correction value includes an instruction to identify a temperature correction value stored in correspondence with the current charge state value, the initial charge state value, and the cooling performance value.

7. The battery charge control apparatus of claim 6, wherein the instruction to determine the temperature correction value includes an instruction to identify a temperature correction value using a temperature correction map in which a temperature correction value is predefined for each section of the initial charge state values, for each section of the current charge state values, and for each section of the cooling performance values.

8. The battery charge control apparatus of claim 1, wherein the instruction to correct the current temperature value includes an instruction to correct the current temperature value by subtracting the determined temperature correction value from the current temperature value.

9. The battery charge control apparatus of claim 1, wherein the instruction to determine the charge current value includes an instruction to identify a charge current value corresponding to the corrected current temperature value and the current charge state value in a charge map in which charge current values are predefined for each section of the temperature values and each section of the charge state values.

10. A battery charge control method performed by a battery charge control apparatus, the battery charge control method comprising:
detecting a current temperature value, a current charge state value, and an initial charge state value at start of charging of a battery;
determining a temperature correction value stored in correspondence with the current charge state value and the initial charge state value;
correcting the current temperature value based on the determined temperature correction value; and
determining a charge current value for charging the battery based on the corrected current temperature value and the current charge state value.

11. The battery charge control method of claim 10, wherein the determining the temperature correction value includes determining the temperature correction value using a temperature correction map in which temperature correction values are predefined for each section of initial charge state values and for each section of current charge state values.

12. The battery charge control method of claim 11, wherein the temperature correction value is defined based on a temperature difference value between a first position and a second position of the battery.

13. The battery charge control method of claim 12, wherein the first position is a position where a temperature sensor that measures a temperature value of the battery is placed and the second location is a location where the distance to a cooling unit is relatively closer than the distance of the first location to the cooling unit.

14. The battery charge control method of claim 12, wherein the temperature correction map is predefined based on the temperature difference value between the first location and the second location measured for each section of the initial charge state values and each section of the current charge state values.

15. The battery charge control method of claim 10, further comprising obtain a cooling performance value of a cooling unit that cools the battery, and
wherein the determining the temperature correction value includes identifying a temperature correction value stored in correspondence with the current charge state value, the initial charge state value, and the cooling performance value.

16. The battery charge control method of claim 15, wherein the determining the temperature correction value includes identifying a temperature correction value using a temperature correction map in which a temperature correction value is predefined for each section of the initial charge state values, for each section of the current charge state values, and for each section of the cooling performance values.

17. The battery charge control method of claim 10, wherein the correcting the current temperature value includes correcting the current temperature value by subtracting the determined temperature correction value from the current temperature value.

18. The battery charge control method of claim 10, wherein the determining the charge current value includes identifying a charge current value corresponding to the corrected current temperature value and the current charge state value in a charge map in which charge current values are predefined for each section of the temperature values and each section of the charge state values.
